# EUROPEAN PATENT SPECIFICATION

(11) **EP 3 106 716 B1**
(45) Date of publication and mention of the grant of the patent: **05.01.2022**
(21) Application number: 16173229.2
(22) Date of filing: 07.06.2016
(51) Int. Cl.: F16H 61/24, F16H 59/10, G05G 5/06, G05G 5/03, G05G 1/04

(54) **MANIPULATION APPARATUS**
MANIPULATIONSVORRICHTUNG
APPAREIL DE MANIPULATION

(30) Priority: 18.06.2015 JP 2015122572
(43) Date of publication of application: 21.12.2016
(73) Proprietor: Alps Alpine Co., Ltd., Tokyo 145-8501 (JP)
(72) Inventor: UENOMACHI, Takashi, Tokyo 145-8501 (JP)
(74) Representative: Schmitt-Nilson Schraud Waibel Wohlfrom Patentanwälte Partnerschaft mbB

(56) References cited:
- WO-A1-91/15864
- WO-A2-2008/145404
- DE-A1-102008 060 256
- DE-U- 1 973 746
- GB-A- 527 308

## Description

### BACKGROUND OF THE INVENTION

### 1. Field of the Invention

The present invention relates to a manipulation apparatus that generates a click feeling when a manipulation is performed.

### 2. Description of the Related Art

As for an automobile on which an automatic transmission is mounted, the structure of a shifter that uses a mechanism (cam) to generate a feeling is disclosed.

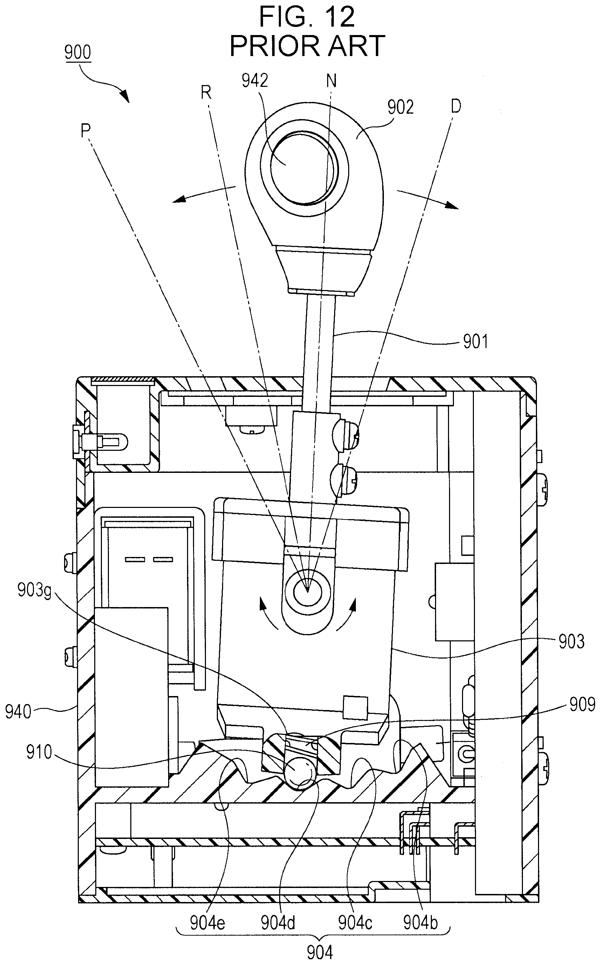

Fig. 12 is a cross-sectional view illustrating an automatic-transmission-oriented shift manipulation apparatus 900 disclosed in Japanese Unexamined Patent Application Publication No. 2002-144905. The automatic-transmission-oriented shift manipulation apparatus 900, which is mounted in an automobile having an automatic transmission, performs a shift manipulation to a desired manipulation position selected from a driving position, a stop position, a parking position, and the like. A shift lever 901 is formed by using, for example, a metal rod-like tube. A knob 902 is secured to the upper end of the shift lever 901, and a holder 903 is fixed to the lower end of the shift lever 901. The shift lever 901 is swingably supported by a first axis and a second axis, which are placed in a case 940. The upper end of the shift lever 901 is covered with a soft resin or a leather and fixedly holds the knob 902 having a pseudo selection button 942, as illustrated in Fig. 12. The holder 903 has a blind hole 903g punched at the lower end in which a click spring 909 and a click body 910 are inserted. The click body 910 is urged by the click spring 909 and is brought into pressure contact with click grooves 904 formed in the inner bottom of the case 940 to support the shift lever 901 at a position (P, R, N, or D) or cause the shift lever 901 to automatically return. As illustrated in Fig. 12, the click grooves 904 include a first click grove 904b that supports the shift lever 901 at the P range, a second click grove 904c that supports the shift lever 901 at the R range, a third click grove 904d that supports the shift lever 901 at the N range, and a fourth click grove 904e that supports the shift lever 901 at the D range, these groove being formed in the fore-aft direction.

When the shift lever 901 is manipulated, the click body 910 urged by the click spring 909 provides a click feeling. This manipulation feeling can be adjusted to an appropriate strength by adjusting the urging force of the click spring 909.

GB 527 308 shows a multiple electric switch, wherein each switch unit comprises a fixed contact and a movable contact in the form of or mounted on a spring-blade and wherein the switch-actuating part when operated is adapted directly to engage any one of said blades or a part integral therewith to move said blade and close the switch unit.

### SUMMARY OF THE INVENTION

However, the structure in which a click spring is used to bring a click body into contact with a cum surface has been problematic in that the urging force at the click grooves (concave parts) in the cam is minimized and the manipulation lever is thereby held with a week force, causing the manipulation lever to rattle. Another problem is that if the force with which the manipulation lever is held is increased, the urging force at the convex parts of the cam becomes larger than necessary, so a feeling at the time of manipulating the manipulation lever is worsened or the life of the apparatus is shortened due to wear of the convex parts.

To solve the above problems, the present invention provides a manipulation apparatus with a superior manipulation feeling.

The manipulation apparatus according to the present invention has a manipulation lever, a click feeling being generated when the manipulation lever is manipulated, and also has a click generating mechanism linked to the manipulation lever. The click generating mechanism has a cam member having concave parts and convex parts, an abutting member that abuts the cam member and generates a movement load so that the cam member relatively moves, a limiting member that limits the movable direction of the abutting member to a direction crossing a direction in which the cam member relatively moves, and an urging force generating means that urges the abutting member in the movable direction. The urging force generating means has a pair of magnetic bodies, at least one of which has a permanent magnet, a generated urging force being a magnetic attractive force between the pair of magnetic bodies.

In this structure, since the magnetic attractive force of the permanent magnet is used as the urging force applied to the abutting member, the urging force is maximized at the concave parts of the cam member, suppressing the manipulation lever from rattling. Even if the concave parts are worn, the urging force is further increased accordingly, so the manipulation lever does not rattle. As a result, the life of the manipulation apparatus is prolonged. Therefore, a manipulation apparatus with a superior manipulation feeling can be obtained.

The manipulation apparatus of the present invention is characterized in that at least one of the pair of the magnetic bodies has the permanent magnet and yokes disposed in a path of a magnetic flux generated by the permanent magnet.

In this structure, since a path of a magnetic flux is formed by the yokes, a high magnetic force is obtained even with a small permanent magnet.

With the manipulation apparatus of the present invention, the urging force generating means preferably has holder members, each of which holds the permanent magnet and yokes together, and the abutting member is fixed to the holder members.

In this structure, since movable direction of each holder member is limited, the limiting member does not need to be disposed at the position of the abutting member, so it is easy to dispose the limiting member and make the click generating mechanism compact.

The manipulation apparatus of the present invention is characterized in that: each holder member has a first holding part that holds the permanent magnet and also has second holding parts that hold the yokes; the first holding part has a first opening into which the permanent magnet is inserted, and each second holding part has a second opening into which the relevant yoke is inserted; and in the holder member, the first opening and second openings are formed so as to face in different directions.

In this structure, since the permanent magnet and yokes are inserted from different directions, they neither stick together nor drop at an intermediate point, so they can be easily assembled. After having been assembled, they are fixed with a magnetic force, eliminating the need for an adhesive or the like.

The manipulation apparatus of the present invention is characterized in that: in the click generating mechanism, the cam member is rotatably disposed and the concave parts and convex parts are point-symmetrically formed with respect to a virtual central axis of rotation; two abutting members are disposed at two point-symmetric positions, one abutting member at one position, with respect to the virtual central axis in correspondence to the concave parts and convex parts; and in the urging force generating means, the pair of magnetic bodies are placed separately at two points where the pair of magnetic bodies urge the two abutting members separately, the pair of magnetic bodies being oppositely disposed near the virtual central axis, the pair of magnetic bodies generating magnetic attractive forces in directions in which the abutting members come close to each other.

In this structure, point-symmetric placement with respect to rotational motion enables strong holding forces to be generated with good balance.

According to the present invention, since the magnetic attractive force of a permanent magnet is used as an urging force applied to an abutting member, the urging force is maximized at the concave parts of a cam member, suppressing a manipulation lever from rattling. Even if the concave parts are worn, the urging force is further increased accordingly, so the manipulation lever does not rattle. As a result, the life of the manipulation apparatus is prolonged. Therefore, a manipulation apparatus with a superior manipulation feeling can be provided.

### BRIEF DESCRIPTION OF THE DRAWINGS

Fig. 1 is a block diagram illustrating a manipulation apparatus in an embodiment of the present invention;
Fig. 2 is a front view illustrating a click generating mechanism in the manipulation apparatus in the embodiment of the present invention;
Fig. 3 is a perspective view illustrating the click generating mechanism in the manipulation apparatus in the embodiment of the present invention;
Fig. 4 is an exploded perspective view illustrating the click generating mechanism in the manipulation apparatus in the embodiment of the present invention;
Fig. 5 is an external view of a cam member, illustrating its side when viewed from the X2 side;
Figs. 6A to 6C are external views of an urging force generating means, Fig. 6A being a side view when viewed from the X2 side, Fig. 6B being a plan view, Fig. 6C being a bottom view;
Fig. 7 is a perspective view of a limiting member when viewed from a side opposite to Fig. 4;
Figs. 8A and 8B are external views of the limiting member, Fig. 8A being a plan view, Fig. 8B being a side view when viewed from the X1 side;
Fig. 9 illustrates the operation of the urging force generating means, indicating a stable state in which the abutting members are seated in the concave parts of the cam member;
Fig. 10 also illustrates the operation of the urging force generating means, indicating a transient state in which the abutting members are positioned on the convex parts of the cam member;
Fig. 11 is a plan view illustrating magnetic lines of magnetic forces generated from a pair of magnetic bodies in the state in Fig. 10; and
Fig. 12 is a cross-sectional view illustrating a conventional automatic-transmission-oriented shift manipulation apparatus.

### DESCRIPTION OF THE PREFERRED EMBODIMENTS

### First embodiment

An embodiment of the present invention will be described in detail with reference to the drawings. For easy comprehension, dimensions on the drawings have been appropriately changed.

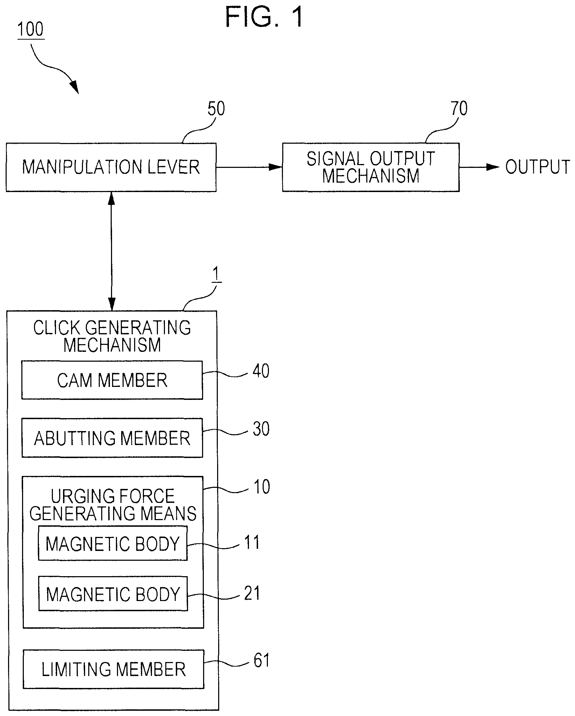

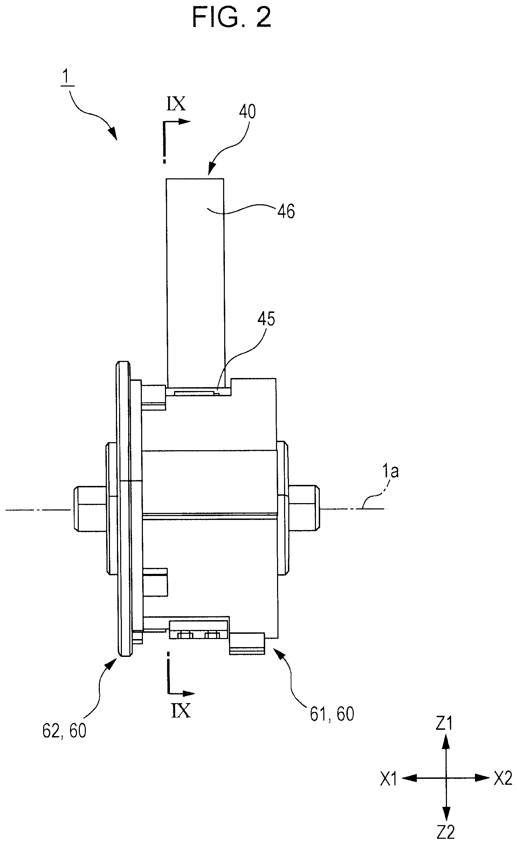

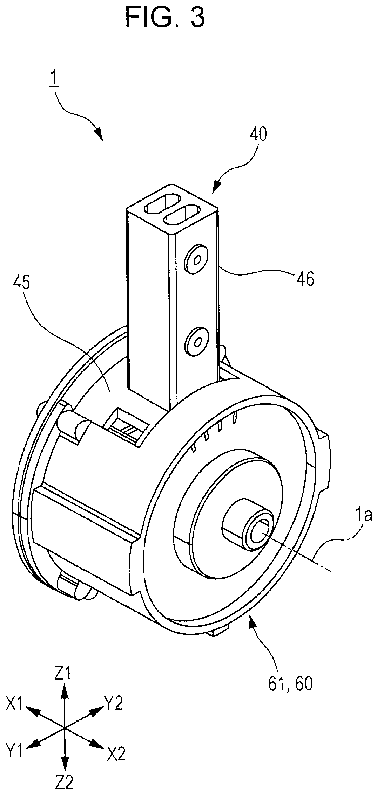

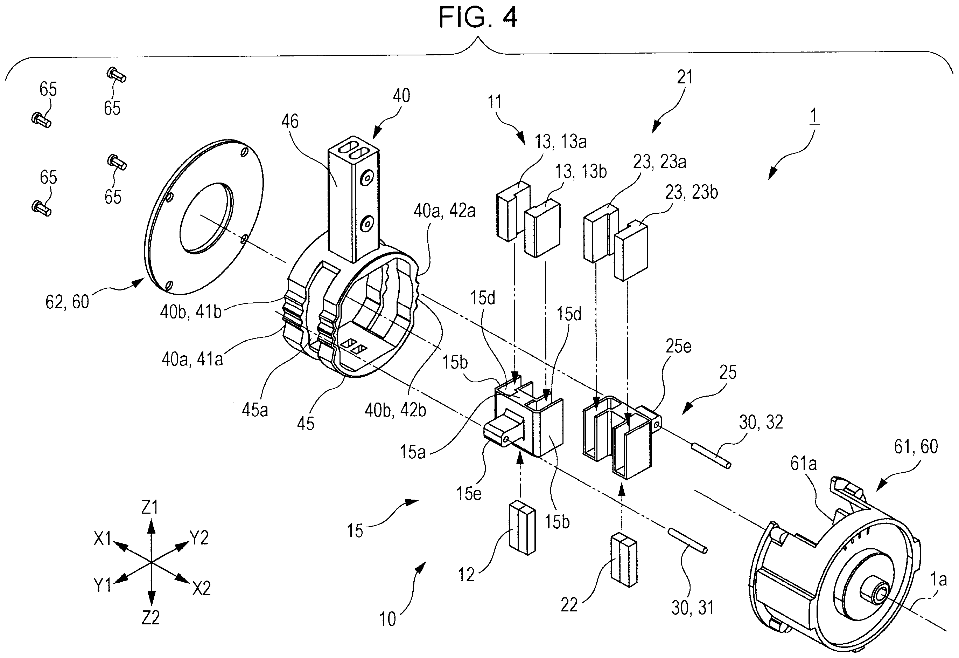

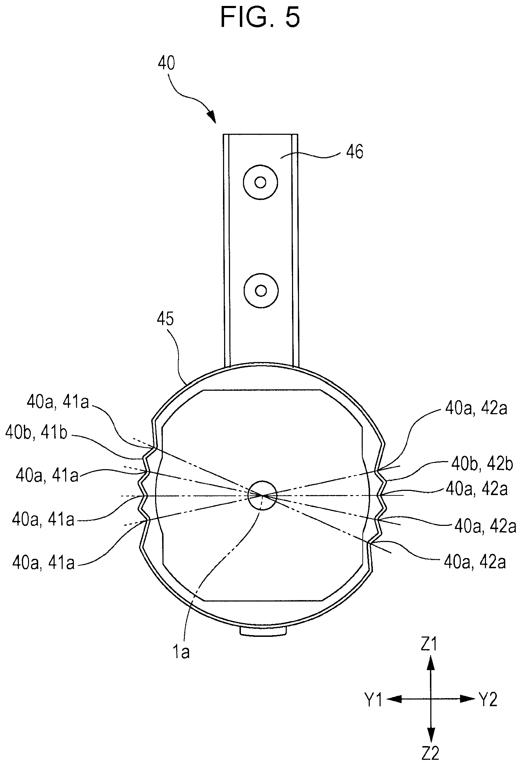

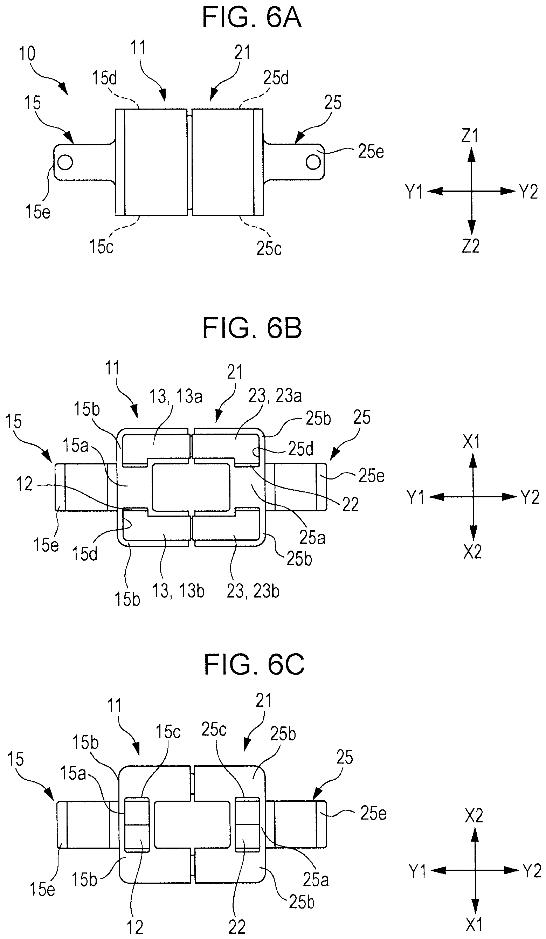

Fig. 1 is a block diagram illustrating a manipulation apparatus 100 in an embodiment of the present invention. Fig. 2 is a front view illustrating a click generating mechanism 1 in the manipulation apparatus 100 in the embodiment of the present invention. Fig. 3 is a perspective view illustrating the click generating mechanism 1. Fig. 4 is an exploded perspective view illustrating the click generating mechanism 1. Fig. 5 is an external view of a cam member 40, illustrating its side when viewed from the X2 side. Figs. 6A to 6C are external views of an urging force generating means 10, Fig. 6A being a side view when viewed from the X2 side,

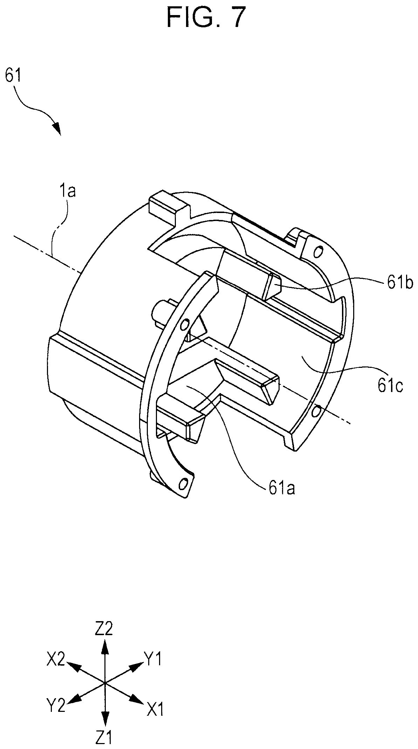

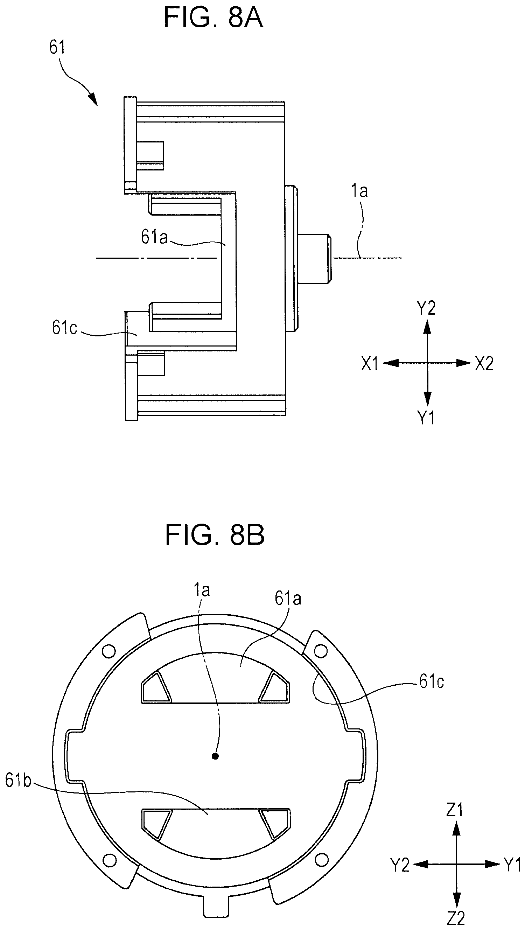

Fig. 6B being a plan view, Fig. 6C being a bottom view. Fig. 7 is a perspective view of a limiting member 61 when viewed from a side opposite to Fig. 4. Figs. 8A and 8B are external views of the limiting member 61; Fig. 8A is a plan view, and Fig. 8B is a side view when viewed from the X1 side.

The manipulation apparatus 100 in this embodiment has a manipulation lever 50, a signal output mechanism 70 that generates a signal when the manipulation lever 50 is manipulated, and a click generating mechanism 1 linked to the manipulation lever 50, as illustrated in Fig. 1. The manipulation apparatus 100 can generate a click feeling when the manipulation lever 50 is manipulated.

The signal output mechanism 70 has, for example, a positional sensor that detects the position of the manipulation lever 50 and an electronic circuit that outputs a signal according to information obtained from the positional sensor.

The click generating mechanism 1 has the cam member 40, abutting members 30, an urging force generating means 10, and a limiting member 61, as illustrated in Fig. 1. The urging force generating means 10 in this embodiment has a pair of magnetic bodies 11 and 21. In this embodiment, the manipulation lever 50 is linked to the cam member 40; when the manipulation lever 50 is manipulated, the cam member 40 relatively moves.

The specific structure of the manipulation apparatus 100 in this embodiment will be described, assuming that the click generating mechanism 1 is as illustrated in Fig. 2 to Figs. 8A and 8B. Besides the click generating mechanism 1 illustrated in Fig. 2 to Figs. 8A and 8B, mechanisms used to provide a manipulation feeling can be added to the manipulation apparatus 100 as necessary. In this description, however, explanation of other parts will be omitted. Explanation of the shape of the manipulation lever 50 and a mechanism that links the manipulation lever 50 and cam member 40 together will also be omitted.

In the structure in this embodiment, the cam member 40 is rotated when the manipulation lever 50 is manipulated. As illustrated in Fig. 4, the cam member 40, which is made of a synthesis resin, has a ring-shaped part 45 formed so as to be rotatable and also has a linking part 46 formed so as to protrude from the ring-shaped part 45. The linking part 46 is linked to the manipulation lever 50 in Fig. 1. The ring-shaped part 45 has concave parts 40a (41a and 42a) and convex parts 40b (41b and 42b). In this embodiment, four concave parts 41a and four concave parts 42a are formed so as to be point-symmetric with respect a virtual central axis 1a illustrated in Figs. 4 and 5, and three convex parts 41b and three convex parts 42b are similarly formed. As illustrated in Fig. 4, an opening 45a is formed at the central portion between the concave parts 40a (41a) and convex parts 40b (41b) of the ring-shaped part 45 in the X1 direction and the concave parts 40a (41a) and convex parts 40b (41b) in the X2 direction. Another opening 45a is similarly formed on the same side as the concave part 40a (42a) and convex part 40b (42b) .

As described above, the urging force generating means 10 has a pair of magnetic bodies 11 and 21 as illustrated in Fig. 4. The urging force generating means 10 has a holder member 15 that integrally holds a permanent magnet 12 and yokes 13, which constitute the magnetic body 11, and also has a holder member 25 that integrally holds a permanent magnet 22 and yokes 23, which constitute the magnetic body 21. The permanent magnet 12 is held so that different magnetic poles are disposed in the X1-X2 directions.

The holder member 15 is made of a synthesis resin. The holder member 15 has a first holding part 15a, which holds the permanent magnet 12, second holding parts 15b, which hold the yokes 13 (13a and 13b), and a supporting part 15e, which supports an abutting member 31, as illustrated in Fig. 4.

In this embodiment, the first holding part 15a of the holder member 15 has a first opening 15c, in a plane on the Z2 side, into which the permanent magnet 12 is inserted, as illustrated in Figs. 6A and 6C. The Z1 side of the first holding part 15a is blocked by a wall surface of the holder member 15. Thus, to insert the permanent magnet 12 into the first opening 15c, it suffices to press the permanent magnet 12 until it abuts the wall surface on the Z1 side.

In addition, the second holding parts 15b of the holder member 15 each have a second opening 15d, in a plane on the Z1 side, into which the yoke 13 (13a or 13b) is inserted. The holder member 15 is disposed with the first opening 15c and second openings 15d facing in different directions. The yokes 13 (13a and 13b) and the second openings 15d are L-shaped when viewed from the Z1 side so as to double as a stopper that prevents the yokes 13 (13a and 13b) from coming off in the Y2 direction. The Z2 side of the second holding part 15b is blocked by a wall surface of the holder member 15. Thus, to insert the yokes 13 (13a and 13b) into the second openings 15d, it suffices to press the yokes 13 (13a and 13b) until they abut the wall surface on the Z2 side. When the permanent magnet 12 is inserted into the first holding part 15a after the yokes 13 (13a and 13b) have been inserted into the second holding part 15b, there is no risk of the yokes 13 (13a and 13b) from coming off the second openings 15d or being attracted by the permanent magnet 12; the permanent magnet 12 and yokes 13 (13a and 13b) are very easy to handle.

In this embodiment, the first holding part 15a of the holder member 15 has openings in the X1-X2 directions so that the permanent magnet 12 and yokes 13 (13a and 13b) inserted into the holder member 15 come into contact with each other. The permanent magnet 12 inserted into the first holding part 15a works to attract the yokes 13 (13a and 13b) inserted into the second holding parts 15b. After having been assembled, therefore, the yokes 13 (13a and 13b) are fixed with magnetic forces. The permanent magnet 12 and yokes 13 (13a and 13b) are integrally held in the holder member 15 without having to use an adhesive or the like. Therefore, even if the click generating mechanism 1 is made compact, it can be easily manufactured.

The orientation of the second opening 15d is not limited to its orientation illustrated in Figs. 6A and 6B. It is only necessary for the orientation of the second opening 15d to be other than the orientation of the first opening 15c and the orientation of a plane facing the magnetic body 21. The holder member 15 in this embodiment is disposed so that the first opening 15c and second openings 15d are oriented in opposite directions, so side walls that partition them double as reinforcing ribs. Therefore, the holder member 15 in this embodiment is less likely to be deformed.

As described above, the urging force generating means 10 has the holder member 25 that integrally holds the permanent magnet 22 and yokes 23, which constitute the magnetic body 21. The holder member 25 has a first holding part 25a that holds the permanent magnet 22 and also has a second holding part 25b that holds the yokes 23 (23a and 23b), as illustrated in Figs. 6B and 6C. The first holding part 25a of the holder member 25 has a first opening 25c, in a plane on the Z2 side, into which the permanent magnet 22 is inserted. The Z1 side of the first holding part 25a is blocked by a wall surface of the holder member 25. The second holding parts 25b of the holder member 25 each have a second opening 25d, in a plane on the Z1 side, into which the yoke 23 (23a or 23b) is inserted. The holder member 25 is disposed with the first opening 25c and second openings 25d facing in different directions. The permanent magnet 22 is held so that different magnetic poles are disposed in the X1-X2 directions.

In this embodiment, the holder member 25 that integrally holds the permanent magnet 22 and yokes 23, which constitute the magnetic body 21, has exactly the same structure as the holder member 15, as illustrated in Figs. 6A to 6C. Specifically, the structure of the holder member 25 is such that the holder member 15, in which the permanent magnet 12 and yokes 13 (13a and 13b) are integrally held, is rotated by 180 degrees around the Z1-Z2 directions. When two sets of a permanent magnet and yokes, which have exactly the same structure, are oppositely placed as described above, this placement enables magnetic attractive forces to be generated. The urging forces generated by the urging force generating means 10 are magnetic attractive forces between the pair of magnetic bodies 11 and 21. Since the magnetic pole placement of the permanent magnet 12 and that of the permanent magnet 22 are in opposite directions and lines of magnetic forces form closed loops through the yokes 13 (13a and 13b) and yokes 23 (23a and 23b), the pair of magnetic body 11 and 21 are efficiently placed as a magnetic circuit as well. Even if the permanent magnets 12 and 22 are small, therefore, their magnetic forces can be increased.

The limiting member 61, which is made of a synthesis resin, forms a case 60 together with a cover 62 and fixing members 65 as illustrated in Fig. 4. The limiting member 61 has a cylindrical wall surface 61c and limiting parts 61a and 61b as illustrated in Fig. 7 and Figs. 8A and 8B. The cylindrical wall surface 61c of the limiting member 61 is formed so as to make sliding contact with the outer circumference of the ring-shaped part 45 of the cam member 40; the cylindrical wall surface 61c is a cylindrical surface centered around the virtual central axis 1a of rotation. The limiting parts 61a and 61b of the limiting member 61 are formed so as to make sliding contact with the holder members 15 and 25, which hold the pair of magnetic bodies 11 and 21. The limiting parts 61a and 61b each have two protrusions extending toward the X1 side.

Each abutting member 30 is made of a metal material so as to have a columnar shape. In this embodiment, the abutting members 30 are divided into the abutting member 31 fixed to the supporting part 15e of the holder member 15 and an abutting member 32 fixed to the supporting part 25e of the holder member 25, as illustrated in Fig. 4. The supporting part 15e has a hole into which the abutting member 31 is inserted, and the supporting part 25e has a hole into which the abutting member 32 is inserted. When the abutting members 31 and 32 are press-fitted to their corresponding holes, the abutting members 31 and 32 are fixed. The supporting parts 15e may be structured so that it pivotably supports the abutting member 31 so as to be rotatable at the position of the supporting part 15e. Similarly, the supporting parts 25e may be structured so that it pivotably supports the abutting member 32 so as to be rotatable at the position of the supporting part 25e.

With the manipulation apparatus 100 in this embodiment, the click generating mechanism 1 is assembled as described below.

The holder member 15, in which the permanent magnet 12 and yokes 13a and 13b are held, and the holder member 25, in which the permanent magnet 22 and yokes 23a and 23b are held, are inserted into the cam member 40 so that the supporting parts 15e and 25e protrude from the openings 45a in the cam member 40. Since the holder members 15 and 25 have magnetic forces with which they are attracted by each other, a spacer is preferably placed so that subsequent work can be easily performed.

Next, the abutting member 31 is fixed to the supporting part 15e of the holder member 15 and the abutting member 32 is fixed to the supporting part 25e of the holder member 25. At that time, the cam member 40 has been positioned so that the abutting members 31 and 32 are respectively placed at the concave parts 41a and 42a, which are formed so as to be point-symmetric with respect a virtual central axis 1a of rotation.

Next, the spacer is removed and the above members are accommodated inside the cylindrical wall surface 61c of the limiting member 61. At that time, the holder members 15 and 25 are guided by the protrusions of the limiting parts 61a and 61b of the limiting member 61 and are positioned at desired positions. The limiting parts 61a and 61b limit the motion of the holder members 15 and 25 in the Z1-Z2 directions so that they can move only in the Y1-Y2 directions. Since directions in which the holder members 15 and 25 can move are limited, the limiting member 61 does not need to be provided at the positions of the abutting members 31 and 32, so the limiting parts 61a and 61b of the limiting member 61 can be easily placed and the click generating mechanism 1 is likely to be made compact.

Finally, the cover 62 is fixed to the limiting member 61 with the fixing members 65, holding the cam member 40 so as to be rotatable. The manipulation apparatus 100 is assembled by disposing the click generating mechanism 1 assembled as described above together with the manipulation lever 50 and other constituent members.

With the manipulation apparatus 100 in this embodiment, a through-hole is formed along the Z1-Z2 directions of the click generating mechanism 1 from an opening formed in the linking part 46 of the cam member 40 to an opening formed on the Z2 side of the cylindrical wall surface 61c of the limiting member 61. Thus, another manipulation mechanism can be placed in this through-hole, enabling another manipulation mechanism to be added as necessary.

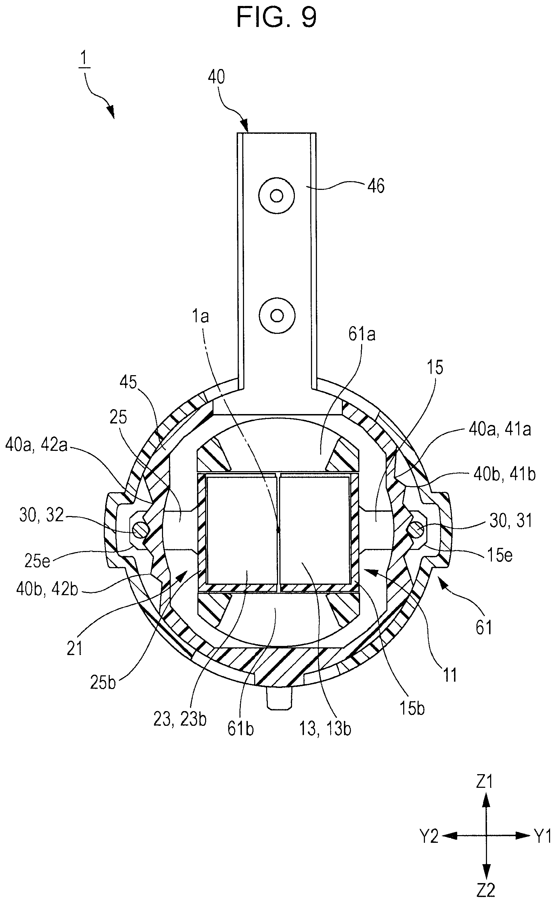

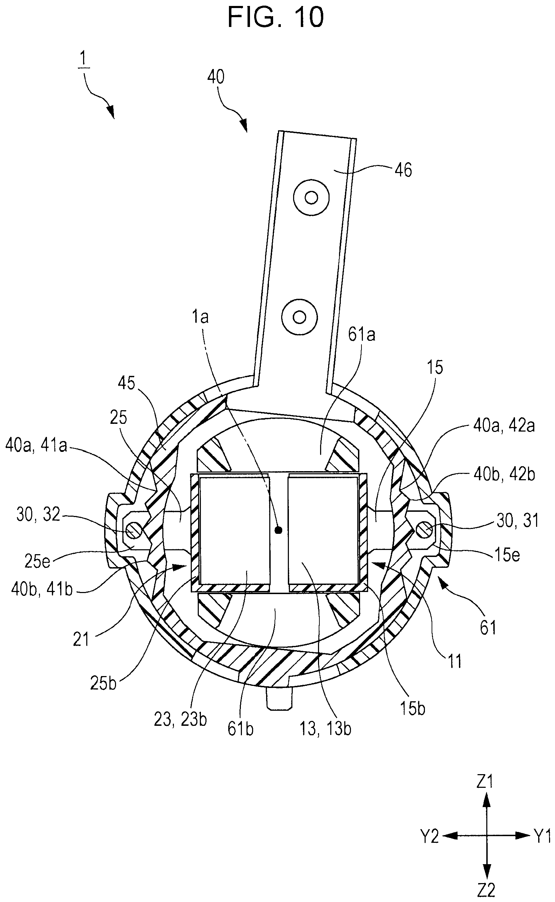

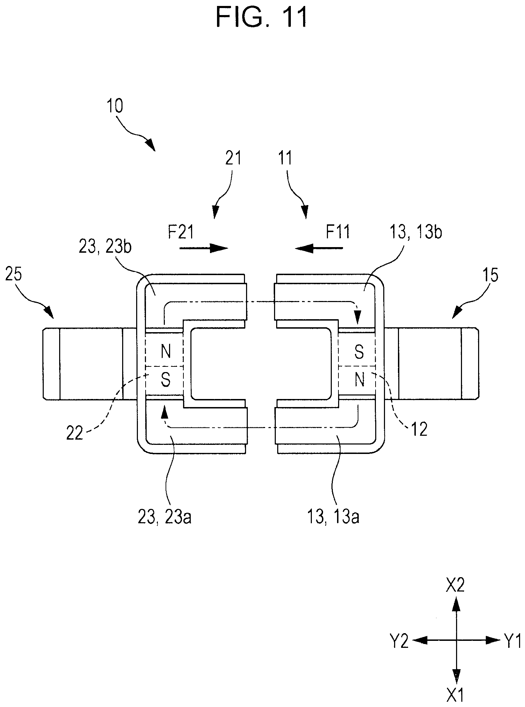

Next, the operation of the click generating mechanism 1 in this embodiment will be described with reference to Figs. 9 to 11. Fig. 9 illustrates the operation of the urging force generating means 10, indicating a stable state in which the abutting members 30 are seated in the concave parts 40a of the cam member 40. Fig. 9 is a cross-sectional view taken along line IX-IX in Fig. 2 when viewed from the X1 side. Fig. 10 also illustrates the operation of the urging force generating means 10, indicating a transient state in which the abutting members 30 are positioned on the convex parts 40b of the cam member 40. Fig. 11 is a plan view illustrating magnetic lines of magnetic forces generated from the pair of magnetic bodies 11 and 21 in the state in Fig. 10.

As illustrated in Fig. 9, the abutting member 31 is placed so as to abut the concave parts 41a of the cam member 40, and the abutting member 32 is placed so as to abut the concave parts 42a of the cam member 40. Thus, the pair of magnetic bodies 11 and 21 are placed at two positions, at which they urge the two abutting members 31 and 32 separately, so as to face each other in the vicinity of the virtual central axis 1a. Since the pair of magnetic bodies 11 and 21 generate magnetic attractive forces in directions in which the abutting members 31 and 32 come close to each other, a stable state is achieved in which the abutting members 31 and 32 are respectively seated in the concave parts 41a and 42a of the cam member 40. Therefore, even if an attempt is made to rotate the linking part 46 of the cam member 40, the linking part 46 is returned to the stable state in Fig. 9 until the abutting member 31 climbs over the convex parts 41b formed at both ends of each concave part 41a and the abutting member 32 climbs over the convex parts 42b formed at both ends of each concave part 42a.

When strong forces are applied due to the magnetic attractive forces of the pair of magnetic bodies 11 and 21 to rotate the linking part 46 of the cam member 40, the abutting members 31 and 32 relatively move until they enter a transient state in which the abutting members 31 and 32 are respectively positioned on the convex parts 41b and 42b of the cam member 40 as illustrated in Fig. 10. At that time, the pair of magnetic bodies 11 and 21 move in directions in which the holder members 15 and 25, which are in sliding contact with the limiting parts 61a and 61b, are separated from each other in the Y1-Y2 directions. Therefore, the lines of magnetic forces of the pair of magnetic bodies 11 and 21 are formed so that closed loops are expanded, so the magnetic attractive forces are relatively reduced, as illustrated in Fig. 11. The magnetic attractive forces F11 and F21 in the transient state in Figs. 10 and 11 are reduced as the positions of the pair of magnetic bodies 11 and 21 are separated from each other. Therefore, forces with which the abutting members 31 and 32 respectively wear the convex parts 41b and convex part 42b of the cam member 40 are also reduced. This effect is not obtained in a case in which an urging force is generated by contracting and expanding a click spring. This characteristic effect is obtained by placing magnetic bodies as in this embodiment.

In a state in which the pair of magnetic bodies 11 and 21 are brought close to each other as illustrated in Fig. 9, the magnetic attractive forces are increased. Therefore, it is possible to obtain stronger urging forces than in a case in which an urging force is generated by contracting and expanding a click spring. The stronger the urging force in this state is, the more rattles can be lessened. In this embodiment, the urging force is maximized at the concave parts 40a of the cam member 40, suppressing the manipulation lever 50 from rattling. Even if the concave part 40a is worn, the urging force is further increased accordingly, so the manipulation lever 50 does not rattle. As a result, the life of the click generating mechanism 1 is prolonged. If an attempt is made to increase the urging force by using a click spring as described above, the force with which the convex parts of the cam is also increased. This is not preferable. When, as in this embodiment, the magnetic attractive force of a magnetic body is used to obtain an urging force that has the same strength as an urging force obtained by using a click spring, it can be said that a more preferable state is achieved.

In this embodiment, four concave parts 41a and four concave parts 42a are formed in the cam member 40. A stable state can be obtained at these four places. That is, to correspond to four manipulation states, the manipulation apparatus 100 in this embodiment can generate a click feeling three times in a rotational direction when the manipulation lever 50 is manipulated. When the number of concave parts 41a and 42a is increased, it is possible to correspond to more manipulation states accordingly.

Since, in this embodiment, the concave parts 40a (41a and 42a) and convex parts 40b (41b and 42b) are point-symmetrically formed with respect to the virtual central axis 1a of the rotation of the click generating mechanism 1, urging does not occur in directions deviated from the virtual central axis 1a. Therefore, an extra urging force is not applied to the manipulation lever 50, resulting in a superior manipulation feeling.

Since, in this embodiment, the urging force generating means 10 of the click generating mechanism 1 has a point-symmetric structure with respect to the rotation of the click generating mechanism 1, strong holding forces can be generated with good balance. In addition, since the urging force generating means 10, which uses the magnetic attractive forces of the pair of magnetic bodies 11 and 21, is accommodated in the limiting member 61, even if a movable range is expanded, the click generating mechanism 1 can be made compact when compared with the conventional structure.

Effects in this embodiment will be described below.

The manipulation apparatus 100 in this embodiment has the manipulation lever 50 and the click generating mechanism 1 linked to the manipulation lever 50. The manipulation apparatus 100 generates a click feeling when the manipulation lever 50 is manipulated. The click generating mechanism 1 has the cam member 40 having the concave parts 40a and convex part 40b, the abutting members 30 that abut the cam member 40 and generate a movement load so that the cam member 40 relatively moves, the limiting member 61 that limits the movable direction of the abutting members 30 to a direction crossing a direction in which the cam member 40 relatively moves, and the urging force generating means 10 that urges the abutting members 30 in the movable direction. The urging force generating means 10 has the pair of magnetic bodies 11 and 21, which respectively have the permanent magnets 12 and 22, generated urging forces being magnetic attractive forces between the pair of magnetic bodies 11 and 21.

In this structure, since the magnetic attractive forces of the permanent magnets 12 and 22 are used as the urging forces applied to the abutting members 30, the urging force is maximized at the concave parts 40a of the cam member 40, suppressing the manipulation lever 50 from rattling. Even if the concave parts 40a are worn, the urging force is further increased accordingly, so the manipulation lever 50 does not rattle. As a result, the life of the click generating mechanism 1 is prolonged.

With the manipulation apparatus 100 in this embodiment, the magnetic body 11 has the permanent magnet 12 and the yokes 13 disposed in a path of a magnetic flux generated by the permanent magnet 12 and the magnetic body 21 has the permanent magnet 22 and the yokes 23 disposed in a path of a magnetic flux generated by the permanent magnet 22, the magnetic bodies 11 and 21 being paired.

In this structure, since paths of magnetic fluxes are formed by the yokes 13 and 23, high magnetic forces are obtained even with the permanent magnets 12 and 22 even if they are small.

With the manipulation apparatus 100 in this embodiment, the urging force generating means 10 has the holder member 15 that holds the permanent magnet 12 and yokes 13 together, and the abutting member 31 is fixed to the holder member 15. The urging force generating means 10 also has the holder member 25 that holds the permanent magnet 22 and yokes 23 together, and the abutting member 32 is fixed to the holder member 25.

In this structure, since directions in which the holder members 15 and 25 move are limited, the limiting member 61 does not need to be disposed at the positions of the abutting members 31 and 32, so it is easy to dispose the limiting member 61 and make the click generating mechanism 1 compact.

With the manipulation apparatus 100 in this embodiment: the holder member 15 has the first holding part 15a that holds the permanent magnet 12 and also has the second holding parts 15b that hold the yokes 13. The first holding part 15a has the first opening 15c into which the permanent magnet 12 is inserted, and each second holding part 15b has the second opening 15d into which the relevant yoke 13 is inserted. In the holder member 15, the first opening 15c and second openings 15d are formed so as to face in different directions. The holder member 25 has the first holding part 25a that holds the permanent magnet 22 and also has the second holding parts 25b that hold the yokes 23. The first holding part 25a has the first opening 25c into which the permanent magnet 22 is inserted, and each second holding part 25b has the second opening 25d into which the relevant yoke 23 is inserted. In the holder member 25, the first opening 25c and second openings 25d are formed so as to face in different directions.

In this structure, since the permanent magnet 12 and yokes 13 are inserted from different directions and the permanent magnet 22 and yokes 23 are inserted from different directions, they neither stick together nor drop at an intermediate point, so they can be easily assembled. After having been assembled, they are fixed with magnetic forces, eliminating the need for an adhesive or the like.

With the manipulation apparatus 100 in this embodiment, in the click generating mechanism 1, the cam member 40 is rotatably placed and the concave parts 40a (41a and 42a) and convex parts 40b (41b and 42b) are point-symmetrically formed with respect to the virtual central axis 1a of rotation. The abutting members 30 (31 and 32) are placed at two point-symmetric positions, one abutting 30 member at one position, with respect to the virtual central axis 1a in correspondence to the concave parts 40a (41a and 42a) and convex parts 40b (41b and 42b). In the urging force generating means 10, the pair of magnetic bodies 11 and 21 are placed separately at two points where the pair of magnetic bodies 11 and 21 urge the two abutting members 30 (31 and 32) separately, the pair of magnetic bodies 11 and 21 being oppositely disposed near the virtual central axis 1a, the pair of magnetic bodies 11 and 21 generating magnetic attractive forces in directions in which the abutting members 30 (31 and 32) come close to each other.

In this structure, point-symmetric placement with respect to rotational motion enables strong holding forces to be generated with good balance.

So far, the manipulation apparatus 100 of the present invention has been specifically described. However, the present invention is not limited to the embodiment described above. Various changes are possible without departing from the intended scope of the present invention. For example, the present invention can also be practiced by making variations as described below. These variations are also included in the technical range of the present invention.
(1) Although, in this embodiment, the manipulation lever 50 has been linked to the cam member 40 so that the cam member 40 is rotated when the manipulation lever 50 is manipulated, a variation may be made so that the cam member 40 is fixed and another member is rotated.
(2) Although, in this embodiment, the pair of magnetic bodies 11 and 21 of the urging force generating means 10 have had the same structure, a variation may be made so that one of the magnetic bodies 11 and 21 has a permanent magnet and yokes disposed in a path of a magnetic flux generated by the permanent magnet and the other has only yokes. Although the yokes have been oppositely disposed so that lines of magnetic forces form closed loops, the structure may lack yokes.
(3) Although, in this embodiment, the concave parts 40a and convex parts 40b have been point-symmetrically formed with respect to the virtual central axis 1a of the rotation of the cam member 40, it is enough for the concave parts 40a and convex parts 40b to be formed only at any one of the symmetric points. For example, the concave parts 40a and convex parts 40b may be formed on a side symmetric with the linking part 46 with respect to the virtual central axis 1a of the rotation of the cam member 40. In this case, it suffices to place a pair of magnetic bodies along the Z1-Z2 directions so that they generate urging forces in a direction toward or away from the virtual central axis 1a of rotation.
(4) Although, in this embodiment, the cam member 40 has been rotated when the manipulation lever 50 is manipulated, the urging force generating means 10 can also be applied to motion other than rotation. For example, in a manipulation apparatus having a manipulation lever that linearly slides, if a pair of magnetic bodies are placed along a direction orthogonal the sliding direction, when a cam member is slid, urging forces can be changed.

## Claims

1. A manipulation apparatus (100) comprising:
a manipulation lever (50), a click feeling being generated when the manipulation lever (50) is manipulated;
and
a click generating mechanism (1) linked to the manipulation lever (50); wherein
the click generating mechanism (1) has
a cam member (40) having a concave part (40a) and a convex part (40b),
an abutting member (30) that abuts the cam member (40) and generates a movement load so that the cam member (40) relatively moves,
a limiting member (61) that limits a movable direction of the abutting member (30) to a direction crossing a direction in which the cam member (40) relatively moves, and
an urging force generating means (10) that urges the abutting member (30) in the movable direction,
**characterized in that**
the urging force generating means (10) has a pair of magnetic bodies (11, 21), at least one of which has a permanent magnet (12), a generated urging force being a magnetic attractive force between the pair of magnetic bodies (11, 21).

2. The manipulation apparatus according to Claim 1,
wherein at least one of the pair of the magnetic bodies (11) and (21) has the permanent magnet (12) and a yoke (13) disposed in a path of a magnetic flux generated by the permanent magnet (12).

3. The manipulation apparatus according to Claim 2, wherein:
the urging force generating means (10) has a holder member (15) that holds the permanent magnet (12) and yoke (13) together, and
the abutting member (30) is fixed to the holder member (15) .

4. The manipulation apparatus according to Claim 3, wherein:
the holder member (15) has a first holding part (15a) that holds the permanent magnet (12) and also has a second holding part (15b) that hold the yoke (13);
the first holding part (15a) has a first opening (15c) into which the permanent magnet (12) is inserted, and the second holding part (15b) has a second openings (15d) into which the yoke (13) is inserted; and
in the holder member (15), the first opening (15c) and the second openings (15d) are formed so as to face in different directions.

5. The manipulation apparatus according to any one of Claims 1 to 4, wherein:
in the click generating mechanism (1), the cam member (40) is rotatably disposed and the concave part (40a) and the convex part (40b) are point-symmetrically formed with respect to a virtual central axis (la) of rotation;
two abutting members (30) are disposed at two point-symmetric positions, one abutting member (30) at one position, with respect to the virtual central axis (1a) in correspondence to the concave part (40a) and convex part (40b); and
in the urging force generating means (10), the pair of magnetic bodies (11, 21) are placed separately at two points where the pair of magnetic bodies (11, 21) urge the two abutting members (30) separately, the pair of magnetic bodies (11, 21) being oppositely disposed near the virtual central axis (la), the pair of magnetic bodies (11, 21) generating magnetic attractive forces in directions in which the abutting members (30) come close to each other.

## Patentansprüche

1. Betätigungsvorrichtung (100), aufweisend:
einen Betätigungshebel (50), wobei bei Betätigung des Betätigungshebels (50) ein Klickgefühl erzeugt wird; und
einen Klickerzeugungsmechanismus (1), der mit dem Betätigungshebel (50) gekoppelt ist;
wobei der Klickerzeugungsmechanismus (1) aufweist:
ein Steuerflächenelement (40) mit einem konkaven Teil (40a) und einem konvexen Teil (40b),
ein Anlageelement (30), das an dem Steuerflächenelement (40) anliegt und
eine Bewegungslast erzeugt, so dass sich das Steuerflächenelement (40) relativ bewegt,
ein Begrenzungselement (61), das eine Bewegungsrichtung des Anlageelements (30) auf eine Richtung begrenzt, die eine Richtung kreuzt, in der sich das Steuerflächenelement (40) relativ bewegt, und
eine Drückkraft-Erzeugungseinrichtung (10), die das Anlageelement (30) in die Bewegungsrichtung drückt,
**dadurch gekennzeichnet,**
**dass** die Drückkraft-Erzeugungseinrichtung (10) ein Paar Magnetkörper (11, 21) aufweist, von denen mindestens einer einen Permanentmagneten (12) aufweist, wobei eine erzeugte Drückkraft eine magnetische Anziehungskraft zwischen dem Paar der Magnetkörper (11, 21) ist.

2. Betätigungsvorrichtung nach Anspruch 1,
wobei mindestens einer des Paares der Magnetkörper (11) und (21) den Permanentmagneten (12) und ein Joch (13) aufweist, das in einem Weg eines Magnetflusses angeordnet ist, der durch den Permanentmagneten (12) erzeugt wird.

3. Betätigungsvorrichtung nach Anspruch 2,
wobei:
die Drückkraft-Erzeugungseinrichtung (10) ein Halterelement (15) aufweist,
das den Permanentmagneten (12) und das Joch (13) zusammenhält, und
das Anlageelement (30) an dem Halterelement (15) befestigt ist.

4. Betätigungsvorrichtung nach Anspruch 3,
wobei:
das Halterelement (15) ein erstes Halteteil (15a) hat, das den Permanentmagneten (12) hält, und ferner ein zweites Halteteil (15b) hat, das das Joch (13) hält;
das erste Halteteil (15a) eine erste Öffnung (15c) aufweist, in die der Permanentmagnet (12) eingesetzt ist, und das zweite Halteteil (15b) eine zweite Öffnung (15d) aufweist, in die das Joch (13) eingesetzt ist; und
in dem Halterelement (15) die erste Öffnung (15c) und die zweite Öffnung (15d) derart ausgebildet sind, dass sie in unterschiedliche Richtungen weisen.

5. Betätigungsvorrichtung nach einem der Ansprüche 1 bis 4,
wobei:
in dem Klickerzeugungsmechanismus (1) das Steuerflächenelement (40) drehbar angeordnet ist und der konkave Teil (40a) und der konvexe Teil (40b) in Bezug auf eine virtuellen Rotations-Mittelachse (1a) punktsymmetrisch ausgebildet sind;
zwei Anlageelemente (30) an zwei punktsymmetrischen Positionen angeordnet sind, wobei ein Anlageelement (30) an einer Position in Bezug auf die virtuelle Mittelachse (1a) entsprechend dem konkaven Teil (40a) und dem konvexen Teil (40b) angeordnet ist; und
in der Drückkraft-Erzeugungseinrichtung (10) das Paar der Magnetkörper (11, 21) getrennt an zwei Punkten angeordnet ist, an denen das Paar der Magnetkörper (11, 21) die beiden Anlageelemente (30) separat beaufschlagt, wobei das Paar der Magnetkörper (11, 21) einander gegenüberliegend nahe der virtuellen Mittelachse (1a) angeordnet ist, wobei das Paar der Magnetkörper (11, 21) magnetische Anziehungskräfte in Richtungen erzeugt, in denen die Anlageelemente (30) sich aneinander annähern.

## Revendications

1. Appareil de manipulation (100) comprenant :
un levier de manipulation (50), une sensation de clic étant générée lorsque le levier de manipulation (50) est manipulé ; et
un mécanisme générateur de clic (1) relié au levier de manipulation (50) ; dans lequel le mécanisme générateur de clic (1) possède
un élément de came (40) ayant une partie concave (40a) et une partie convexe (40b),
un élément de butée (30) qui est attenant à l'élément de came (40) et génère une charge de déplacement de sorte que l'élément de came (40) effectue un déplacement relatif,
un élément limitant (61) qui limite une direction de déplacement de l'élément de butée (30) à une direction transversale par rapport à une direction dans laquelle l'élément de came (40) effectue le déplacement relatif, et
un moyen générateur d'une force de sollicitation (10) qui pousse l'élément de butée (30) dans la direction de déplacement,
**caractérisé en ce que**
le moyen générateur d'une force de sollicitation (10) possède une paire de corps magnétiques (11, 21), dont un au moins possède un aimant permanent (12), une force de sollicitation générée étant une force d'attraction magnétique entre la paire de corps magnétiques (11, 21).

2. L'appareil de manipulation selon la revendication 1, dans lequel au moins un de la paire de corps magnétiques (11) et (21) possède un aimant permanent (12) et un étrier (13) disposé sur le trajet d'un flux magnétique généré par l'aimant permanent (12).

3. L'appareil de manipulation selon la revendication 2, dans lequel :
le moyen générateur d'une force de sollicitation (10) possède un élément de support (15) qui maintient l'aimant permanent (12) et l'étrier (13) ensemble, et
l'élément de butée (30) est fixé à l'élément de support (15).

4. L'appareil de manipulation selon la revendication 3, dans lequel :
l'élément de support (15) possède une première partie de support (15a) qui maintient l'aimant permanent (12) et une deuxième partie de support (15b) qui maintient l'étrier (13) ;
la première partie de support (15a) possède une première ouverture (15c) dans laquelle est inséré l'aimant permanent (12) et la deuxième partie de support (15b) possède une deuxième ouverture (15d) dans laquelle est inséré l'étrier (13) ; et
dans l'élément de support (15), la première ouverture (15c) et la deuxième ouverture (15d) sont formées de manière à être orientées dans différentes directions.

5. L'appareil de manipulation selon l'une quelconque des revendications 1 à 4, dans lequel :
dans le mécanisme générateur de clic (1), l'élément de came (40) est disposé de manière rotative et la partie concave (40a) et la partie convexe (40b) sont formées de manière ponctuellement symétrique par rapport à un axe central virtuel (1a) de rotation ;
deux éléments de butée (30) sont disposés en deux positions ponctuellement symétriques, un élément de butée (30) en une position, par rapport à l'axe central virtuel (1a) en correspondance avec la partie concave (40a) et la partie convexe (40b) ; et
dans le moyen générateur d'une force de sollicitation (10), la paire de corps magnétiques (11, 21) est placée séparément en deux points où la paire de corps magnétiques (11, 21) sollicite les deux éléments de butée (30) séparément, la paire de corps magnétiques (11, 21) étant disposée de manière opposée près de l'axe central virtuel (1a), la paire de corps magnétiques (11, 21) générant des forces d'attraction magnétique dans des directions dans lesquelles les éléments de butée (30) se rapprochent l'un de l'autre.
